(19) Europäisches Patentamt
European Patent Office
Office européen des brevets

(11) Veröffentlichungsnummer: **0 120 253**
**B1**

(12) # EUROPÄISCHE PATENTSCHRIFT

(45) Veröffentlichungstag der Patentschrift: **01.04.87**

(51) Int. Cl.⁴: **C 08 K 5/34,** C 09 D 5/18, C 08 L 75/04

(21) Anmeldenummer: **84101434.3**

(22) Anmeldetag: **13.02.84**

(54) **Gegebenenfalls geschäumte Intumeszenzmassen und daraus hergestellte Formteile.**

(30) Priorität: **25.02.83 DE 3306698**

(43) Veröffentlichungstag der Anmeldung:
**03.10.84 Patentblatt 84/40**

(45) Bekanntmachung des Hinweises auf die Patenterteilung:
**01.04.87 Patentblatt 87/14**

(84) Benannte Vertragsstaaten:
**AT BE CH DE FR GB IT LI NL SE**

(56) Entgegenhaltungen:
**EP - A - 0 051 106**
**EP - A - 0 061 024**
**FR - A - 2 405 284**
**US - A - 3 396 129**
**US - A - 4 003 861**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelssohnstrasse 30, D-5090 Leverkusen 1 (DE)**
Erfinder: **Jonas, Friedrich, Dr., Krugenofen 15, D-5100 Aachen (DE)**

EP 0 120 253 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft gegebenenfalls geschäumte Intumeszenzmassen auf Basis von Polyurethanen, die als Rezepturbestandteil eine Kombination aus speziellen Polyethern und/oder Polyestern sowie Phosphaten vom Melaminphosphattyp enthalten und plastisch-elastischen Charakter haben.

Als Intumeszenzmassen werden solche Materialien ververstanden, die bei Einwirkung von Feuer und Hitze aufschäumen und dabei einen isolierenden und feuerabweisenden Schaum bilden, der die rückwärtigen Bezirke von der Feuereinwirkung schützt. Solche Intumeszenzmassen sind in Form von Lacken, Beschichtungen, Mörteln und Kitten bekannt.

Gute Intumeszenzmassen sollten bei Flammenzutritt ihr Volumen mindestens verdoppeln können und ausserdem beständig sein gegen Wasserangriff. Insbesondere ist es von technischem Interesse, wenn diese Eigenschaften kombiniert werden können mit Halogenfreiheit und geringem Raumgewicht, d.h. gewisser Isolierwirkung im unbeanspruchten Zustand, sowie Plastizität bzw. Flexibilität und/oder Elastizität.

Elastisch-plastische Intumeszenzmasssen mit guter Formbeständigkeit könnten bei in-situ Anwendung oder als Halbzeuge wie Bänder, Platten, Wickel, Profile, Beschichtungen, Granulate oder Verfüllungen eine Vielzahl von Anwendungen im Bereich des vorbeugenden Brandschutzes finden.

Die Mitverwendung von Melamin bei der Herstellung von Weichschaumstoffen unter Verwendung von im wesentlichen linearen Polyolen, vorzugsweise Polyetherpolyolen, ist prinzipiell bekannt (DE-OS 28 15 554). Solche Schaumstoffe haben zwar den Charakter der Schwerentflammbarkeit und brennen bei Beflammung nicht mehr vollständig ab. Auf keinen Fall haben sie jedoch den Charakter von Intumeszenzmassen; eine Volumenvergrösserung bei Beflammung unter Ausbildung eines feuerabweisenden Schaumes wird nicht beobachtet.

Gemäss einem älteren Vorschlag (DE-OS 30 25 217) lassen sich flammwidrige Dichtungsmassen, die frei von Phosphor und Halogen sind, unter Verwendung von verzweigten Hydroxylgruppen aufweisenden Polyestern herstellen. Solche Dichtungsmassen haben ebenfalls keinen Intumeszenzcharakter, d.h. sie schäumen bei Beflammung nicht auf.

Gegebenenfalls geschäumte Intumeszenzmassen sind ferner der DE-OS 30 41 731 und der DE-OS 31 09 352 bekannt.

Wenngleich derartige gegebenenfalls geschäumte Intumeszenzmassen auch die wünschenswerten Eigenschaften in zufriedenstellendem Masse besitzen, besteht dennoch der Wunsch, die phosphorhaltigen Kondensationsprodukte gegen leichter zugängliche phosphorhaltige Verbindungen bzw. solche mit verminderter Wasserlöslichkeit auszutauschen. Noch vorteilhafter wäres es, ein Material zu finden, das gleichzeitig die Rolle des füllstoffartigen Cyanursäurederivates und des phosphorhaltigen Kondensationsproduktes übernehmen könnte.

Es wurde nunmehr überraschenderweise gefunden, dass es möglich ist, zu gegebenenfalls flexiblen Intumeszenzmassen zu kommen, gegebenenfalls bei gleichzeitigem Verzicht auf die kompliziert aufgebauten phosphorhaltigen Kondensationsprodukte und Ersatz des Cyanursäureabkömmlings. Das bedeutet, dass die Rezeptgestaltung wesentlich vereinfacht werden kann, indem es nunmehr möglich ist, die neuen Intumeszenzmassen aus statt bisher mindestens vier, nunmehr aus nur mindestens drei Komponenten aufzubauen.

Dies wird erreicht, indem man anstelle des Cyanursäureabkömmlings und des phosphorhaltigen Kondensationsproduktes leicht zugängliche und wenig wasserlösliche Phosphate vom Typ des Melaminphosphats verwendet. Die Mitverwendung der beiden nunmehr ersetzten Komponenten ist nicht mehr erforderlich, es ist aber natürlich möglich, diese ausserdem noch mitzuverwenden, was eventuell zu Vorteilen hinsichtlich Brandverhalten und Intumeszenzvermögen führen kann.

Die FR-A 2 405 284 betrifft intumeszente Anstrichmassen, die aus folgenden Bestandteilen bestehen: einem Lösungs- bzw. Verdünnungsmittel, einem Polymerharz, Ammonium- oder Aminphosphaten und einem Intumeszenzmittel. Als in Frage kommende Aminphosphate werden in der FR-A auch Melaminphosphate genannt; als Intumeszenzmittel kommen Reaktionsprodukte von Di- oder Triisocyanaten mit organischen Verbindungen mit reaktiven Wasserstoffatomen in Frage, Wie aus Seite, 4, Zeilen 1–8 der FR-A hervorgeht, handelt es sich bei den organischen Verbindungen mit reaktiven Wasserstoffatomen um niedermolekulare Verbindungen wie Ethylenglykol oder Glycerin.

Die US-A 3 396 129 beschreibt die Mitverwendung von Polyaminotriazinphosphaten bei der Herstellung von intumeszierenden Beschichtungskompositonen (Anstrichmitteln) auf Basis von wasserresistenten Polyurethanen. Diese Polyurethane werden durch Umsetzung von Isocyanaten mit mehrwertigen Alkoholen wie Glycerin, Sorbit oder Mannit (vgl. Spalte 3, Zeilen 10–17 und 58–64) hergestellt.

Die US-A 4 003 861 beschreibt die Mitverwendung von Melaminpyrophosphat bei der Herstellung von flammwidrigen Polyurethanschaumstoffen.

Die Polyurethanbasis der erfindungsgemässen Intumeszenzmassen besteht demgegenüber aus Umsetzungsprodukten von Polyisocyanaten mit den näher definierten Polyethern, neben denen gegebenenfalls auch näher definierte Polyester zusätzlich mitverwendet werden können. Es wurde nun überraschenderweise gefunden, dass bei der Mitverwendung von Melaminphosphaten bei Vorhandensein dieser Polyurethanbasis ein Intumeszenzmaterial erhalten wird, das bei Beflammung aufschäumt, aber nicht abtropft oder brennend abschmilzt.

Gegenstand der vorliegenden Erfindung sind somit gegebenenfalls geschäumte Intumeszenzmassen, erhalten aus Polyurethanen, Melaminphosphaten und gegebenenfalls weitere Zusatzmitteln, dadurch gekennzeichnet, dass als Polyurethane Umsetzungsprodukte von

1. Polyisocyanaten mit

2. Polyethern einer durchschnittlichen OH-Zahl von 150 bis 500, die durch Anlagerung von Alkylenoxiden, die zu 50–100 Gew.-%, vorzugsweise zu 100 Gew.-%, aus Ethylenoxid bestehen, an niedermolekulare Starter erhalten worden sind, gegebenenfalls in Gegenwart von

3. Hydroxylgruppen aufweisenden Polyestern der OH-Zahl 100 bis 300, erhalten durch Umsetzung von zwei bis 10 C-Atome aufweisenden aliphatischen, cycloaliphatischen, araliphatischen und aromatischen Polycarbonsäuren mit mindestens zwei Polyolen aus zwei verschiedenen der drei folgenden Gruppen

a) mehr als drei OH-Gruppen aufweisende Hydroxylverbindungen vom Molekulargewicht bis 200,

b) drei OH-Gruppen aufweisende Hydroxylverbindungen vom Molekulargewicht bis 150,

c) zwei OH-Gruppen aufweisende Hydroxylverbindungen vom Molekulargewicht bis 80, wobei ein Polyol der Gruppe a) angehören soll, und als Zusatzmittel

4. Wasser und/oder

5. weitere Verbindungen mit gegenüber Isocyanaten reaktionsfähigen Wasserstoffatomen verwendet werden.

Bevorzugt sind Intumeszenzmassen, dadurch gekennzeichnet, dass als Polyisocyanate aromatische Mehrkern-Polyisocyanate vom MDI-Typ und als Phosphate Melaminphosphate mit 0,2 bis 1 Mol Ortho-Phosphorsäure pro Mol Melamin verwendet werden.

Besonders bevorzugt sind Intumeszenzmassen, dadurch gekennzeichnet, dass als gegebenenfalls mitzuverwendende weitere Verbindungen (5) mindestens zwei Hydroxylgruppen aufweisende phosphorhaltige Kondensationsprodukte, erhältlich durch Kondensation von gegebenenfalls OH-Gruppen enthaltenden primären oder sekundären Mono- und/oder Polyaminen, Carbonylverbindungen und Dialkylphosphiten, gegebenenfalls unter anschliessendem Oxalkylieren, eingesetzt werden.

Die Erfindung betrifft ferner Formteile und Vorrichtungen für den vorbeugenden Brandschutz, hergestellt aus den obengenannten Intumeszenzmassen.

Erfindungsgemäss sind solche Intumeszenzmassen bevorzugt, die durch Umsetzung von 10 bis 60 Gew.-Teilen eines Polyisocyanats (1) mit 100 Gew.-Teilen eines Gemisches, bestehend aus 25 bis 80 Gew.-% der genannten Polyether und/oder Polyester (2:3) und 20 bis 80 Gew.-% an Phosphaten vom Melaminphosphat-Typ (4) und 0 bis 10 Gew.-% Wasser (5) und/oder 0 bis 35 Gew.-% an weiteren organischen Verbindungen mit gegenüber Isocyanaten reaktionsfähigen Wasserstoffatomen (6) erhalten worden sind.

Besonders bevorzugt sind Intumeszenzmassen, dadurch gekennzeichnet, dass als Polyisocyanate Polyphenylenpolymethylpolyisocyanate verwendet werden, wie sie durch Anilin-Formaldehyd-Kondensation und anschliessende Phosgenierung erhalten werden (MDI), und auch solche, die als Phosphate vom Melaminphosphat-Typ Umsetzungsprodukte aus Melamin und Orthophosphorsäure enthalten.

Die Erfindung betrifft auch die Verwendung der neuen Intumeszenzmassen als Hohlraumfüllungen, Fugenabdichtungen und Beschichtungen mit Intumeszenzeigenschaften. Die Erfindung betrifft ferner die Verwendung der Intumeszenzmassen, erhalten durch Reaktion in Formen oder durch nachträgliche Verformung der ausreagierten Reaktionsgemische, zur Herstellung von Formkörpern mit Intumeszenzeigenschaften oder die Verwendung in Pulverform.

Im Falle der Erfindung werden gegebenenfalls flexible gegebenenfalls geschäumte Intumeszenzmassen erhalten. Bei den geschäumten Typen wurde überraschenderweise noch gefunden, dass sie den Charakter von gegen Wasser beständigen, plastisch-elastischen geschäumten Massen haben können, d.h. sie lassen sich gegebenenfalls leicht zusammendrücken und erholen sich nur langsam unter Ausbildung der ursprünglichen Form. Dieses unerwartete Verhalten ist als technisch besonders vorteilhaft zu bewerten, z.B. wenn es gilt, solche Intumeszenzmassen in Form vorgefertigter Bänder, U-förmig gebogener Profile oder sonstiger Formkörper leicht in Fugen oder Hohlräume einzubringen, wo sie sich dann wieder ausdehnen und den zu verschliessenden Spalt mit all seinen gegebenen Formunregelmässigkeiten ausfüllen.

Plastische, elastische oder plastisch-elastische wasserfeste Intumeszenzmassen, wie sie erfindungsgemäss erhalten werden, besitzen ein besonderes technisches Interesse, weil sich daraus hergestellte Vorformlinge besonders einfach in Fugen oder Hohlräume eindrücken lassen, weil sie auch zur Umwickelung von Kabeln und Rohren verwendet werden können und ihre Anwendbarkeit durch Erschütterungen des Applikationsfeldes nicht beeinträchtigt wird. Ihre erhebliche Resistenz gegen Wasserzutritt ist weiterhin ein interessanter technischer Vorteil.

Die erfindungsgemäss zugänglichen, gegebenenfalls weichen, flexiblen Intumeszenzmassen sind naturgemäss schwer entflammbar, auch ohne Mitverwendung von Halogenverbindungen. Sie schäumen bei Beflammung bis zum Zehnfachen ihres ursprünglichen Volumens auf und bilden dabei einen feuerabweisenden Schaum, der die rückwärtigen Bereiche vor weiterem Flammenzutritt abschirmt.

Sie können gegebenenfalls auch in der Nähe (d.h. zumeist unterhalb) ihrer Aufschäumtemperatur thermoplastisch verarbeitet werden. Bei geeigneter Temperaturführung im Laufe der thermoplastischen Verarbeitung (z.B. durch Pressen, Extrudieren) zu Formkörpern können diese geschäumten oder massiven Charakter haben. Das

thermoplastische Verfahren unter gewissen Bearbeitungsbedingungen kann auch zur Modifizierung von Formteilen z.B. Platten aus geschäumtem Material herangezogen werden, etwa zum Trennen oder Verschweissen mit anderen Materialien oder auch zum Prägen bzw. bleibendem Verformen.

Überraschenderweise zeigte sich, dass offenbar nur die erfindungsgemäss einzusetzenden Phosphate vom Melaminphosphat-Typ zu brauchbaren Intumeszenzmassen führen, d.h. ein Intumeszenzmaterial liefern, das bei Beflammung aufschäumt ohne abzutropfen oder brennend abzuschmelzen. Verwendet man anstelle von Melaminphosphat z.B. Ammoniumpolyphosphat, erhält man ein Material, das bei Beflammung ohne wesentliche Bildung eines Intumeszenzschaumes abschmilzt und kocht; benutzt man nur reines Melamin, erhält man ein Material, das brennend abtropft, bei Einsatz von Ethylendiaminphosphat oder dessen Mischungen mit Melamin erhältliche Materialien tropfen in der Flamme sofort leichtflüssig ab, so dass kein Intumeszenzschaum gebildet wird, obgleich die Schmelze im Flammenbereich an und für sich zur Intumeszenz neigt.

Dagegen beobachtet man bei Intumeszenzmaterialien, die erfindungsgemäss z.B. unter Verwendung von Melamin-Orthophosphaten hergestellt worden sind, bei Beflammung eine kräftige Intumeszenz, ohne dass eine Neigung zum Abtropfen des Materials in der Flamme festzustellen ist. Genau dieses Verhalten aber ist für die technische Verwendbarkeit der Intumeszenzmaterialien von erheblicher Bedeutung.

Bei der Herstellung der neuen Intumeszenzmaterialien kann kontinuierlich oder diskontinuierlich gearbeitet werden. Die Herstellung kann auch durch Vermischen der gegebenenfalls mit Katalysatoren und sonstigen Hilfsmitteln versehenen Komponenten bzw. bereits vorgemischter Komponentengemische vor Ort geschehen und die Reaktionsmischung maschinell oder per Hand in z.B. zu verschliessende Öffnungen bzw. beheizte oder unbeheizte Formen drucklos oder unter Druck eingegossen werden, so sie dann aufschäumt bzw. aushärtet. Sie kann bei entsprechender technischer Ausrüstung auf die zu schützenden Substrate und Untergründe aufgesprüht, aufgestrichen oder aufgegossen werden. Es ist auch in Betracht zu ziehen, dass man mit den erfindungsgemässen Reaktionsgemischen zunächst Halbzeuge, z.B. Schaumstoffe, Profile oder Beschichtungen herstellt und diese dann in technisch erforderlicher Weise weiterverarbeitet, z.B. durch Schneiden, durch Warmverformen, Granulieren, Mahlen oder Mischen, Beschichten und Verkleben. Die Materialien können auch in gepulverter oder granulierter Form als Intumeszenzfüllstoffe zur Hohlraumfüllung oder als Beimengung zu Beschichtungsmitteln, Kitten oder Kunststoffen Verwendung finden.

Durch Kombination der Reaktionsgemische mit geschäumten oder massiven anorganischen oder organischen Zuschlagstoffen, wie z.B. Russ, Graphit, Koks, wasserhaltige Silikate, Perlite, Verukulite, blähfähige Graphite, Polystyrolschaum, Polyurethanschaum, Phenoplasten, Aminoplasten oder Kies oder Blähton, Blähgraphit, Harnstoff- oder Phenolharzschäumen, Schaumglas, Glasfasern, Holz, Mineralwolle, Bims usw., können auch Verbunde mit speziellen Intumeszenzeigenschaften erhalten werden. Die Anwendung der erfindungsgemässen Intumeszenzmassen ° zur Herstellung von mit Fasern oder Drähten bzw. Geweben, Strängen oder Vliesen aus organischen oder anorganischen Materialien verstärkten Formteilen oder ihre Verwendung als Bestandteil in Mehrschicht- bzw. Sandwichaufbauten sind ebenfalls in Betracht zu ziehen; ebenso die Kombination mit anderen Intumeszenzmaterialien auf organischer oder anorganischer Basis.

Als Füllstoffe kommen allein oder in Kombination insbesondere Aluminiumoxidhydrate, Kreide, Kaolin, CA-Silikate, Glas, Russ, Graphit, Koks, wasserhaltige Silikate, Perlite, Verukulite, blähfähige Graphite und massive oder hohle Perlen aus silikatischem Material in Betracht, z.B. sogenannte Mikroballons; Aluminiumoxidhydrate sind wegen ihrer Dehydratisierungsfähigkeit neben Hohlperlen bevorzugt.

Für die Durchführung des erfindungsgemässen Verfahrens werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n 2–4, vorzugsweise 2, und

Q einen aliphatischen Kohlenwasserstoffrest mit 2–18, vorzugsweise 6–10 C-Atomen, einen cycloaliphatischen Kohlenwasserstoffrest mit 4–15, vorzugsweise 5–10 C-Atomen, einen aromatischen Kohlenwasserstoffrest mit 6–15, vorzugsweise 6–13 C-Atomen, oder einen araliphatischen Kohlenwasserstoffrest mit 8–15, vorzugsweise 8–13 C-Atomen, bedeuten, z.B. Ethylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-2,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4-4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat (reines MDI), Naphthylen-1,5-diisocyanat.

Ferner kommen beispielsweise erfindungsgemäss in Frage: Triphenyl-methan-4,4',4''-triisocyanat, Polyphenylpolymethylen-polyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidigruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890 der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonder bevorzugt werden in der Regel die technisch leicht zugänglichen Polyisocyanate, z.B. das 2,4- und 2,6-Toluylendiisocyanat sowie beliebige Gemische dieser Isomeren («TDT»), Polyphenyl-polymethylen-polyisocyanate, wie sie durch Anilin-Formaldehyd-Kondensation und anschliessende Phosgenierung hergestellt werden («rohes MDI»), und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»), insbesondere solche modifizierten Polyisocyanat, die sich vom 2,4- und/oder 2,6-Toluylendiisocyanat bzw. vom 4,4'- und/oder 2,4'-Diphenylmethandiisocyanat ableiten.

Polyether einer durchschnittlichen OH-Zahl von 150 bis 500, die durch Anlagerung von Alkylenoxiden, die zu 50 bis 100 Gew.-% aus Ethylenoxid bestehen, an Zerewitinow-aktive niedermolekulare Starter erhalten worden sind. Mehr als bifunktionelle Polyether mit OH-Zahlen von etwa 180 bis 400 sind besonders bevorzugt.

«Mehr als bifunktionell» bedeutet im Sinne der Erfindung, dass auch bifunktionelle Polyether im Gemisch mit tri- und/oder höherfunktionellen Polyethern vorliegen können. Bevorzugt wird eine Funktionalität von 2,5 bis 4.

Hierbei ist die Beoabachtung bemerkenswert, dass in den Polyethern, das Ethylenoxid nur in untergeordnetem molarem Umfang durch andere Alkylenoxide wie etwa Propylenoxid ausgetauscht werden kann, da sonst bei Beflammung der erhaltenen Intumeszenzmassen ein unerwünscht starkes Nachbrennen festgestellt wird und die Intumeszenzeigenschaften zugunsten eines Abschmelzens verloren gehen.

Wenngleich als Polyether erfindungsgemäss Ethylenoxidanlagerungsprodukte bevorzugt werden, ist es prinzipiell auch möglich, bis zu etwa 50 Gew.-% des angelagerten Ethylenoxids durch Propylenoxid bzw. andere Alkylenoxide zu ersetzen, wobei jedoch mit einer Verschlechterung der Intumeszenzmassen gerechnet werden muss, so dass die Mitverwendung von Polyethern, bei deren Herstellung neben Ethylenoxid andere Alkylenoxide, z.B. Propylenoxid mitverwendet werden kann, weniger bevorzugt ist.

Natürlich ist auch die Verwendung oder Mitverwendung von Halogen enthaltenden Startermolekülen, z.B. Dibromneopentylglykol oder Epoxiden, z.B. Epichlorhydrin erfindungsgemäss in Betracht zu ziehen, es ist aber nicht notwendig, diese Komponenten zur Erzielung eines befriedigenden Brandverhaltens einzusetzen. Zumeist wird Halogen in Brandschutzartikeln zunehmend mehr abgelehnt.

Die Herstellung der Polyether erfolgt nach dem Fachmann bekannten Methoden, wie sie in der Polyetherchemie üblich sind.

Als niedermolekulare Startermoleküle kommen die für die Herstellung von Polyethern an sich bekannten Verbindungen in Frage, z.B. Wasser, Ethylenglykol, Propylenglykol, Butandiol, Trimethylolpropan, Glycerin, Triethanolamin, Pentaerythrit, Ethylendiamin, Toluylendiamin, die verschiedensten Zucker und deren Hydrierungsprodukte, Formosen und Formite, Anilin, Polyalkylenpolyamine, Benzidine bzw. deren Hydrierungsprodukte, Anilin-Formaldehydkondensate und deren Hydrierungsprodukte. Auch aliphatische und aromatische Polycarbonsäuren sind als Starter in Betracht zu ziehen, auch Aminosäuren oder Aminoalkohole wie Ethanolamin.

Hydroxylgruppen aufweisenden Polyester der OH-Zahl 100 bis 300, erhalten durch Umsetzung von zwei bis zehn C-Atome aufweisenden aliphatischen, cycloaliphatischen, araliphatischen und aromatischen Polycarbonsäuren mit mindestens zwei Polyolen aus zwei verschiedenen der drei folgenden Gruppen

a) mehr als drei OH-Gruppen aufweisende Hydroxylverbindung vom Molekulargewicht bis 200,

b) drei OH-Gruppen aufweisende Hydroxylverbindungen vom Molekulargewicht bis 150,

c) zwei OH-Gruppen aufweisende Hydroxylverbindungen vom Molekulargewicht bis 80, wobei ein Polyol der Gruppe a) angehören soll.

Als Polycarbonsäuren kommen die an sich bekannten in Frage; neben den Benzoldicarbonsäuren sind aliphatische Polycarbonsäuren mit 3–10 C-Atomen bevorzugt.

Als Benzoldicarbonsäuren seien z.B. Phthalsäure, Iso- und Terephthalsäure genannt; als aliphatische Polycarbonsäuren werden insbesondere solche mit 3 bis 8 C-Atomen wie Zitronensäure, Oxalsäure, Malein- und Fumarsäure, Bernsteinsäure verwendet. Wegen der guten Zugänglichkeit ist Adipinsäure bevorzugt.

Von den Hydroxylverbindungen der Gruppe a) ist Pentaerythrit bevorzugt, es sind aber z.B. auch in Betracht zu ziehen Mannit, Sorbit, Xylit Formit, d.h. Zuckerpolyole.

Von den Hydroxylverbindungen der Gruppe b) ist Glycerin bevorzugt, in Betracht zu ziehen sind aber auch z.B. Trimethylolpropan oder Triethanolamin.

Von den Hydroxylverbindungen der Gruppe c) ist bevorzugt Ethylenglykol zu nennen.

Die Polyester besitzen bei 75 °C Viskositäten um 200 bis 8000 cP, bevorzugt werden Viskositäten von 300 bis 5000 cP bei 75 °C. Die Säurezahlen sollen unter 10 liegen, vorzugsweise zwischen 0 und 5. Die Molekulargewichte liegen um 300 bis 4000, vorzugsweise bei 500 bis 1500, die OH-Zahlen bei 100 bis 350, vorzugsweise 200–300.

Die Mitverwendung weiterer Polyester anderer Zusammensetzung ist grundsätzlich möglich, jedoch sollte ihr Anteil 20 Gew.-% der gesamten Polyestermenge nicht überschreiten.

Phosphate vom Melaminphosphat-Typ. Unter diesen werden vorzugsweise Umsetzungsprodukte aus 1 Mol Melamin mit 0,01 bis 2,5, vorzugsweise 0,5 bis 1,0 Mol ortho-Phosphorsäure verstanden. Es können aber auch andere Phosphorsäuren, wie etwa Meta- oder Pyrophosphorsäure oder solche mit anderen Wertigkeitsstufen des Phosphors in Betracht gezogen werden. Die Herstellung der Phosphate geschieht z.B. durch Umsetzung von Melamin mit $H_3PO_4$ in wässriger Suspension bei 10–120 °C, abkühlen, filtrieren und trocknen. Mischungen von Melamin mit Melaminphosphaten hohen Gehaltes an Phosphorsäure können an Stelle von Melaminphosphaten mit niedrigem Phosphorsäuregehalt verwendet werden.

Im generellen erfindunsgemässen Verständnis werden hier aber auch solche Phosphate als «Phosphate vom Melaminphosphat-Typ» bezeichnet, die sich als im Wasser unter 5 Gew.-%, vorzugsweise unter 1 Gew.-% löslich (in Form der gesättigten Lösung bei Raumtemperatur) erweisen und gegebenenfalls durch Addition von Phosphorsäuren an Verbindungen entstehen, die als Cyanursäureabkömmlinge zu bezeichnen sind, z.B. an Cyanamid, Dicyanamid, Hydrazodicarbonamid, Dicyandiamin, Guanidin und dessen Salze, Biguanid, Urazol, Urazolcyanurat, Melamincyanurat, Cyanursäuresalze und Cyanursäureester und -amide, insbesondere Melamin, das wegen seiner guten Zugänglichkeit bevorzugt wird.

Als Melamin wird vorzugsweise der Grundkörper 2,4,6-Triamino-s-Triazin verstanden, es sind jedoch auch die z.B. durch dessen thermische Behandlung oder Umsetzung mit Formaldehyd erhältlichen Kondensationsprodukte in Betracht zu ziehen.

Gemäss Erfindung werden hier auch Harnstoff, Guanidin, Allophanat, Biurett, Dicyandiamid, deren Polykondensationsprodukte und vorwiegend deren wasserunlösliche Formaldehydkondensationsprodukte miterfasst.

Die Erfindung bezieht auch die Kombination aus z.B. rotem Phosphor in z.B. einer den Phosphorsäuren stöchiometrisch entsprechenden Menge und z.B. Melamin ein, da dieser beim Verbrennungsprozess sofort in Phosphorsäuren übergeht und dann die Phosphate der Erfindung in situ bildet.

5. Gegebenenfalls Wasser und

6. gegebenenfalls weitere organische Verbindungen mit gegenüber Isocyanaten reaktionsfähigen Wasserstoffatomen. Hierzu zählen insbesondere:

Mindestens zwei Hydroxylgruppen aufweisende phosphorhaltige Kondensationsprodukte, wie sie z.B. durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschliessendem Oxalkylieren, erhalten werden können. Derartige Kondensationsprodukte sind an sich bekannt, z.B. aus der DE-PS 1 143 022, US-PS 3 076 010, DE-AS 1 803 747 und DE-AS 1 928 265.

Zur evtl. Mitverwendung sind erfindungemäss bevorzugt als mindestens zwei Hydroxylgruppen aufweisende phosphorhaltige Kondensationsprodukte solche der Formel

$$(RO)_2\text{–PO–}CH_2\text{–N}=(CHX\text{–}CHX\text{–}OH)_2,$$

in der

R $C_1$–$C_8$-Alkyl oder $C_1$–$C_8$-Hydroxylalkyl, vorzugsweise Ethyl oder Hydroxylethyl, und

X H oder Methyl, vorzugsweise H, bedeuten.

Es sind aber auch in Betracht zu ziehen

Verbindungen mit mindestens zwei gegenüber Isocyanaten reationsfähigen Wasserstoffatomen, von einem Molekulargewicht in der Regel von 400–10 000. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisenden Verbindungen, speziell solche vom Molekulargewicht 1000 bis 6000, vorzugsweise 1000 bis 3000, z.B. mindestens zwei, in der Regel 2 bis 8, vorzugsweise aber 2 bis 4, Hydroxylgruppen aufweisene Polyester, andere als die unter 3) genannten Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung des Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Furmarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2)-und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Auch die in Frage kommenden, mindestens zwei, in der Regel zwei bis acht, vorzugsweise zwei bis drei, Hydroxylgruppen aufweisenden anderen als unter 3) genannten Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohol, Ammoniak oder Amine, hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäss in Frage.

Vertreter der genannten erfindungsgmäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyethern und Polyestern, eingesetzt werden.

b) Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glycerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-Hydroxymethylhydrochinon, Ethanolamin, Diethanolamin, N-Methyl-diethanolamin, Triethanolamin, und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit»), in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Erfindungsgemäss geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terepthalsäure; Semicarbazido-alkylen-hydrazide wie z.B. β-Semicarbazidopropionsäurehydrazid (DE-Offenlegungsschrift 1 770 591), Semicarbazidoalkylencarbazinester wie z.B. 2-Semicarbazidoethyl-carbazinester (DE-Offenlegungsschrift 1 918 504) oder auch Amino-semicarbazid-Verbindungen wie z.B. β-Aminoethyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäss DE-Offenlegungsschriften 1 770 525 und 1 809 172 (US-Patentschriften 3 654 364 und 3 736 295) gegebenenfalls in 5-Stellung substituierte 2-Halogen-1,3-phenylendiamine (DE-Offenlegungsschriften 2 001 772, 2 025 896 und 2 065 869), 3,3'Dichlor-4,4'-diamino-diphenylmethan, Toluylendiamin, 4,4'-Diamino-diphenylmethan.

Die Mitverwendung der letztgenannten Reaktionskomponenten (6) kann zwar in Betracht gezogen werden, erfordert im Einzelfall jedoch ein Abwägen der dadurch möglichen Nachteile im Brandverhalten.

Es wurde gefunden, dass für die vorteilhaften Eigenschaften der neuen Intumeszenzmassen, insbesondere der Intumeszenzschäume, nicht die für die konventionelle Polyurethanchemie üblichen stöchiometrischen Verhältnisse charakteristisch sind. Vielmehr werden die Komponenten 2, 3, 4 und gegebenenfalls 5, 6 ungeachtet der in Bezug auf die Isocyanatchemie zu fordernden Stöchiometrie zusammengestellt und die so erhältliche Mischung in einfachen Vorversuchen mit verschiedenen, innerhalb eines erfindungsgemäss gegebenen Mengenspielraums liegenden Mengen des Polyisocyanats umgesetzt, um die gewünschte optimale Wirksamkeit empirisch zu ermitteln.

Die so gefundenen Richtmengen für die einzelnen Komponenten 2, 3, 4 und gegebenenfalls 5, 6 in dem mit dem Polyisocyanat umzusetzenden Reaktionsgemisch ergänzen sich zu 100% und betragen:

– für die Polyhydroxylverbindungen (2, 3): 20 bis 80, vorzugsweise 40 bis 70%,

– für die Phosphate (4): 15 bis 75, vorzugsweise 20 bis 50 Gew.-%,

– für Wasser (5): 0 bis 10, vorzugsweise 0 bis 1,5 Gew.-%,

– für die weitere organische Verbindung mit gegenüber Isocyanaten aktiven H-Atomen (6):0 bis 35, vorzugsweise 0 bis 20 Gew.-%.

100 Gew-Teile dieses Reaktionsgemisches werden in der Regel mit 15 bis 70, vorzugsweise 20 bis 50 Gew.-Teilen des Polyisocyanats umgesetzt.

Die Herstellung der Intumeszenzmassen kann in einem Lösungsmittel, vorzugsweise jedoch lösungsmittelfrei, erfolgen. Von besonderem Interesse sind Schaumstoffe; diese können Raumgewichte von ca. 40 bis 900 kg/m$^3$, bevorzugt zwischen 80 und 600 kg/m$^3$, aufweisen. Eine besonders ausgewogene Kombination zwischen aus Gründen der Isolierfähigkeit angestrebtem niedrigem Raumgewicht und für die Aufschäumwirkung bei Flammenzutritt in der Raumeinheit notwendiger Masse stellen erfindungsgemäss zugängliche Schaumstoffe mit Raumgewichten von ca. 150 bis 500 kg/m$^3$ dar.

Man kann die verschiedenen Reaktionskomponenten einzeln zuammenführen; zweckmässigerweise jedoch macht man eine Vormischung aus den mit den Polyisocyanaten (Komponente I) reaktionsfähigen Komponenten 2, 3, 4 und gegebenenfalls 5 und/oder 6 und erhält so gegebenenfalls nach kurzem Erwärmen eine flüssige Reaktionskomponente, in der alle notwendigen Bestandteile bis auf das Polyisocyanat enthalten sind. Auf diese Weise lassen sich die erfindungsgemässen Intumeszenzmassen als Zweikomponentengemisch formulieren bzw. aus diesem herstellen. Hierzu sind die üblichen Einrichtungen der Polyurethantechnologie einsetzbar.

Es ist durchaus möglich, der Komponentenvormischung gegebenenfalls auch dem Isocyanat, noch weitere Rezepturbestandteile zuzusetzen, z.B. Harnstoff, Harnstoffkondensate, Formaldehydkondensate, Phenolharze, Phosphate, Aminopolyphosphate, Phosphorsäureester z.B. Trikresylphosphat oder Dibutylkresylphosphat, Al-Oxidhydrate, Glaspulver, Vermiculite, massive oder hohle Glas- oder sonstige Silikatperlchen und sonstige das Brandverhalten modifizierenden Zusatzstoffe.

Die Erfindung bezieht auch ein die Kombination von Phosphorsäuren, z.B. Orthophosphorsäure, und Melamin direkt im Reaktionsgemisch, d.h. es muss nicht vorgefertigtes Melaminphosphat eingesetzt, sondern es kann in situ im Reaktionsgemisch gebildet werden. Hierbei ist dann im Reaktionsprodukt die gleichzeitige Anwesenheit der Phosphorsäure und des Melamins von Bedeutung für das hervorragende Verhalten bei Beflammung, ohne dass die getrennt vorgenommene vorherige Synthese des Umsetzungsproduktes beider Komponenten erforderlich gewesen wäre.

Obgleich es überraschenderweise nicht notwendig ist, zur Herstellung der erfindungsgemässen gegebenenfalls geschäumten Intumeszenzmassen Katalysatoren für die Schaumstoffbildung oder sonstige Hilfsmittel, wie sie sonst in der Schaumstoffchemie üblich sind, beispielsweise auch zusätzlich gasförmige oder niedrig siedende Treibmittel, bzw. Treibgaserzeuger mitzuverwenden, können solche zusätzlichen Hilfsmittel, ebenso wie emulgierende, Schaum stabilisierende, trennende, farbgebende, konservierende, Hydrolysenschutz vermittelnde, geruchsaktive oder sonstige Zusatzstoffe natürlich im Einzelfass als Rezepturkomponente in Betracht gezogen werden. Beispielsweise führt die Mitverwendung von zur Carbodiimidbildung Anlass gebenden Katalysatoren, wie sie z.B. in der Klasse der Phospholinoxide wie etwa 1-Methyl-1-oxo-phospholin, bekannt sind, zu Intumeszenzmassen mit verbesserter Stabilität gegen Hydrolyse.

Weiterhin ist in Betracht zu ziehen, auch solche Zusatzstoffe rezepturmässig in den erfindungsgemässen Intumeszenzmassen mit einzusetzen, die die Schaumbildung im Falle der Beflammung steigern helfen können. Solche sind beispielsweise aliphatische und insbesondere aromatische Hydroxycarbonsäuren wie Salicylsäure oder p-Hydroxybenzoesäure, PVC, Kohlehydrate oder bei erhöhter Temperatur Gase bzw. Wasser, Stickstoff oder $CO_2$ abgebende Substanzen wie Triazole, Azodicarbonamide, Sulfohydrazide oder Harnstoff-dicarbonsäureanhydrid, Nitrosoverbindungen, Einlagerungsverbindungen von Wasser, Salpetersäure, Kohlensäure, Paraffinen in Graphit, Harnstoff oder Zeolithe.

Man kann aus den erfindungsgemässen Intumeszenzmassen z.B. durch Einarbeiten in oder Aufrakeln auf Textilien aus organischen oder anorgansichen Fasern, durch Sprühen, Verpressen oder Formgiessen und Gelieren, durch Schneiden oder Schmelzen, Formkörper oder Beläge fabrizieren, die bei Temperaturen zwischen ca. 200 und 350 °C aufschäumen und so eine Flammenausbreitung verhindern, die also als Dichtelemente, Sicherungsvorrichtung, Brandsperren geeignet sind. Man kann Verfügungen vornehmen, Kabeldurchbrüche, Maueröffnungen verschliessen, wobei z.B. auch eine Art Beton aus dem Intumeszenzmittel und Steinen und/oder geblähten Teilchen wie Blähton, Blähgas, Vermiculite, Perlit u.ä. und/oder auch Schaumstoffperlen auf z.B. Polystyrolbasis hergestellt und verwendet werden kann.

Von Interesse ist auch die Herstellung von Brandschutz vermittelnden Polsterbeschichtungen, Polsterbelägen und Textilbeschichtungen bzw. Textilkaschierungen mittels der neuen, flexiblen Intumeszenzmassen.

Ebenfalls ist von Interesse die Herstellung von gegebenenfalls armierten Beschichtungen nahezu beliebiger Dicke auf Metall, z.B. Stahlträger und -blechen, Holz, z.B. Türblätter, Dachbalken, auf Mauerwerk, auf Kunststoffen seien es Kabelisolierungen oder Schaumstoffplatten. Wenn man die Beschichtungen auf einer tragfähigen Platte oder Stützkonstruktion vornimmt, z.B. in bzw. auf einer Reckmetallplatte, einer Wabenplatte aus Metall, Pappe, Papier, Holz, Keramik oder Kunststoff, dann können so leicht feuerhemmende Platten oder Wandelemente hergestellt werden.

Die Intumeszenzmassen sind auch für die Herstellung von Antidröhnbelägen oder Schallschutzelementen von Interesse, sowie für Zwecke der Energieabsorption.

Auch die Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten. Man kann auch Dichtprofile, z.B. aus elastischem Material, mit den erfindungsgemässen Intumeszenzmassen füllen oder hinterfüllen und so eine Brandschutzdichtung erzielen. Durch geeignete Anordnung kann man in Kaminen, Lüftungs- und Klimaanlagen, Rohrleitungen und Ein-/Austrittsöffnungen Sperren aufbauen, die im Fall einer Erhitzung auf ca. 300 °C, bis 400 °C den weiteren Durchtritt von Gasen bremsen oder verhindern. Solche Anordnungen sind z.B. Stapel von in geringen Abständen parallel liegenden Platten, mit den Intumeszenzmassen beschichtete Siebe und Lochblenden oder mit Granulaten der Intumeszenzmassen lokker gefüllte Rohrabschnitte, bzw. Rohre und Innenbeschichtung aus den erfindungsgemässen Intumeszenzmassen. Die gegebenenfalls geschäumten Intumeszenzmassen können auch als Filterelemente für Gase eingesetzt werden, die sich bei zu grosser Temperaturerhöhung verschliessen.

Das Ausgiessen oder Füllen von Hohlprofilen aus Metall, Holz oder Kunststoff mit den Intumeszenzmassen verbessert deren Standvermögen im Brandfalle.

Man kann auch z.B. Formkörper, die aus den Intumeszenzmassen leicht herstellbar sind, oder auch Granulate verschiedenster Körnung ein- oder mehrstufig verschäumen, indem man sie auf Temperaturen über 200 °C erhitzt, vorzugsweise auf Temperaturen zwischen 250 bis 1000 °C; insbesondere 300–800 °C. Die Verschäumung kann frei oder in geschlossenen oder offenen Formen vorgenommen werden, wobei diese Formen zweckmässigerweise Öffnungen zum Austritt von Dampf und Luft aufweisen sollten.

Hierbei entstehen feuerabweisende Schaumstoffe, sogenannte Carbonisierungsschäume.

Das Erhitzen kann durch Strahlungswärme, durch Behandeln mit Heissdampf oder Heissluft oder sonstigen heissen Gasen, durch Mikrowellen oder Hochfrequenz bzw. durch Wärmeleitung in Luft oder Flüssigkeitsbädern bzw. Metallbädern geschehen.

Man kann die erfindungsgemässen Intumeszenzmassen auch auf Trägermaterialien aufbringen und dort verschäumen, z.B. indem man Blähtonteilchen beschichtet, dann in eine Form schüttet und dort erhitzt, wobei ein Block aus in Carbonisierungsschaum eingebettetem Blähton entsteht. Eine entsprechend beschichtete Holz- oder Eisenplatte kann bei ca. 250 °C zu einer Schaumstoffkombinationsplatte verarbeitet werden, wobei die Schaumstoffoberfläche durch eine weitere Holz- oder Eisenplatte abgedeckt werden kann.

Zu erwähnen ist auch das Ausschäumen von Hohlräumen, z.B. in Kabelschächten, aber auch in Ziegelsteinen und sonstigen Baustoffen, was z.B. durch Einbringen der Reaktionsmischungen oder fertigen Schaumstoff-Intumeszenzmassen in geeigneter Menge in den Hohlraum des kalten oder noch warmen Steines gelingt.

Die erfindungsgemässen Intumeszenzmassen sind auch in Form von Rohrhalbschalen oder von Vollmänteln zur Isolierung von Rohren oder Kabeln geeignet. Von Interesse ist, dass die Isolierung auch in situ vorgenommen werden kann, indem man das Rohr oder das zu isolierende Stück mit dem Reaktionsgemisch beschichtet und gegebenenfalls zum Aufschäumen bringt.

Die Herstellung und Verarbeitung der zu den Intumeszenzmassen führenden Reaktionsgemische kann kontinuierlich oder diskontinuierlich erfolgen. Man kann die Komponenten einzeln oder als Gemische zusammenführen. Vorzugsweise werden alle Reaktionskomponenten bis auf das Isocyanat zusammengefasst, so dass eine 2-Komponentenverarbeitung erfolgen kann, z.B. in normalen Handrührgefässen mit mechanischen Rührern, in Rührwerks- oder Düsen- oder Sprühmischköpfen oder in Statikmischern, wie sie auch aus der Polyurethanchemie bekannt sind. Die Ausreaktion kann in gekühlten, kalten oder (auf 25 bis ca. 100 °C) beheizten Formen drucklos oder unter Druck erfolgen.

Die folgenden Beispiele sollen den Erfindungsgegenstand beispielhaft erläutern, nicht aber einschränken. Die angegebenen Teile sind Gewichtsteile und/oder Gewichtsprozente, falls nicht anders vermerkt ist.

Beispiele

Die folgenden Versuchsreihen sollen den Zusammenhang zwischen Rezeptur und Eigenschaften der erfindungsgemäss zugänglichen Intumeszenzmassen beispielhaft erläutern.

Als Ausgangsmaterialien werden verwendet:

Als Polyisocyanat (1) ein durch Phosgenierung von Anilin-Formaldehyd-Kondensaten erhaltenes, handelsübliches technisches Polyisocyanatisomerengemisch mit einem Gehalt von ca. 80% Zweikerndiisocyanaten und ca. 20% Mehrkernpolyisocyanaten (NCO-Gehalt ca. 31 Gew.-%).

Als Polyether (2) werden verwendet:

2a: Anlagerungsprodukt von Ethylenoxid an Glycerin, OH-Zahl 254

2b: Anlagerungsprodukt von Ethylenoxid an Glycerin, OH-Zahl 200

2c: Anlagerungsprodukt von Ethylenoxid an Trimethylolpropan, OH-Zahl 150

2d: Anlagerungsprodukt von Ethylenoxid an Glykol, OH-Zahl 172

2e: Anlagerungsprodukt von einem Gemisch aus 40 Gew.-% Propylenoxid und 60 Gew.-% Ethylenoxid an o-Tolamin, OH-Zahl 430

2f: Anlagerungsprodukt von Propylenoxid und Ethylenoxid (1:1) an Glycerin, OH-Zahl 255

2g: Anlagerungsprodukt von 40 Gew.-% Propylenoxid und 60 Gew.-% Ethylenoxid an ein Gemisch aus gleichen Gew.-Teilen Glycerin und Propylenglykol, OH-Zahl 260

2h: Anlagerungsprodukt von Ethylenoxid an Triethanolamin, OH-Zahl 230.

Als Polyester (3) ein Polyester aus ca. 6 Mol Adipinsäure, ca. 1 Mol Pentaerythrit, ca. 0,25 Mol Neopentylglykol, 0,25 Mol Glycerin und ca. 5,00 Mol Ethylenglykol miteiner OH-Zahl von 256; einer Säurezahl von 3,1; einer Viskosität bei 75 °C von 388 cP.

Als Phosphat vom Melaminphosphat-Typ (4) wird verwendet ein Umsetzungsprodukt aus Melamin (1 Mol) mit einem Mol $H_3PO_4$ = Phosphat 4a und mit 0,5 Mol $H_3PO_4$ = 4b.

Die Beispiele 1 bis 12 sind in der Tabelle 1 rezepturmässig zusammengefasst.

Die Herstellung der Intumeszenzmassen erfolgt so, dass die Komponenten Isocyanat, Polyol und Phosphat mittels Kneter bzw. Rührvorrichtung gut vermischt wurden bei RT. Es entstand ein Teig, der sofort in eine U-förmige Profilform aus Silikonkautschuk mit einem Querschnitt von 1 $cm^2$ und einer Länge von ca. 1 m gedrückt wurde. Diese Form wurde über Nacht im Umluftschrank bei 50 °C getempert und dann wurde das aus dem erfindungsgemässen Intumeszenzmassen bestehende Profilstück der Form entnommen.

Es handelt sich um zähe, flexible Materialien,

die sich in Form des vorliegenden Profils z.B. in Dichtungsfugen, Setzfugen usw. einklemmen lassen und diese dann feuerbeständig und isolierend abdichten können. Das weniger flexible Material aus Beispiel 1 lässt sich gut granulieren und mit den Granulaten lassen sich intumeszente Schüttungen in gefärdeten Hohlräumen realisieren.

Zur Beurteilung der ebenfalls in der Tabelle aufgeführten Intumeszenz und Brandeigenschaften wurden die Profile in Quader mit 1 cm Kantenlänge geschnitten und in einen auf 300 °C vorgeheizten Ofen gebracht. Nach einer Stunde wurde das Material entnommen und die Volumenzunahme des zumeist blumenkohl-artig aufgeschäumten Materials geschätzt. In allen Fällen wurde eine Expansion unter Bildung eines Karbonisierungsschaumes beobachtet.

Weiterhin wurde ein Quader der Versuchsmuster mit 0,5 cm Kantenlänge hergestellt und auf einem Drahtsieb liegend von oben mit der entleuchteten Flamme eines Erdgasbunsenbrenners beflammt. Nach 3 Minuten wurde die Flamme gelöscht und die Expansion geschätzt.

Zur Beurteilung des Nachbrennens wurde das Intumeszenzprofil mit 1 $cm^2$ Querschnitt von unten mit der entleuchteten Flamme des Bunsenbrenners beflammt. Nach 30 und 60 sek. wurde die Flamme kurz entfernt und das evtl. Nachbrennen beurteilt:

| | |
|---|---|
| Sofortiges Erlöschen | = (–) |
| unter 5 Sek. Brennen | = (–+) |
| unter 10 Sek. Brennen | = (+–) |
| über 10 Sek. Brennen | = (+) |

Tabelle 1

| Beispiel Nr. | 1 | 2 | 3 | 4 | 5 | 6 | 7 | 8 | 9 | 10 | 11 | 12 | 13 |
|---|---|---|---|---|---|---|---|---|---|---|---|---|---|
| Komponenten (Gew.-Teile) Isocyanat | | | | | | | | | | | | | |
| Typ 1 | 10 | 20 | 25 | 35 | 50 | 50 | 20 | 28 | 20 | 23 | 25 | 24 | 25 |
| Polyol | | | | | | | | | | | | | |
| Typ 2a | 25 | 35 | 50 | 65 | 80 | | 50 | | | | | | 50 |
| Typ 2b | | | | | | | | 35 | | | | | |
| Typ 2c | | | | | | | | | 25 | | | | |
| Typ 2d | | | | | | | | | | 50 | | | |
| Typ 2e | | | | | | | | | | | 20 | | |
| Typ 2f | | | | | | | | | | | 20 | | |
| Typ 2g | | | | | | | | | | | | 25 | |
| Typ 2h | | | | | | | | | | | | 25 | |
| 3 | | | | | | 80 | | 20 | 25 | | 10 | | |
| Phosphat | | | | | | | | | | | | | |
| Typ 4a | 40 | 25 | 50 | 35 | 20 | 25 | 30 | 30 | | 15 | 35 | 30 | |
| Typ 4b | 35 | 40 | | | | 25 | | | 30 | 15 | | | 25 |
| Melamin | | | | | | | | | | | | | 25 |
| Intumeszenz % | | | | | | | | | | | | | |
| 300 °C | 50 | 150 | 150 | 200 | 250 | 50 | 300 | 200 | 300 | 250 | 200 | 200 | 300 |
| Beflammung | 200 | 300 | 300 | 200 | 100 | 200 | 300 | 300 | 300 | 300 | 200 | 300 | 300 |
| Nachbrennen | – | – | –+ | –+ | +– | – | +– | –+ | – | –+ | –+ | –+ | –+ |

Beispiel 14

95 Teile Polyol 2a und 5 Teile Polyol 3 werden mit 28 Teilen eines technischen P-Esters (Wassergehalt ca. 0,2%) der idealisierten Formel $(C_2H_5O)_2POCH_2N(C_2H_4OH)_2$, sowie 1,7 Teilen Eisenoxid-Rotpigment, 13 Teilen Aluminiumoxidhydrat und 48 Teilen eines Umsetzungsproduktes aus 1 Mol Melamin und 0,5 Mol $H_3PO_4$ zu einem homogenen dünnflüssigen Brei vermischt. In diese Mischung werden bei RT 92 Teile eines durch Phosgenierung von Anilin-Formaldehydkondensaten erhältlichen, handelsüblichen, technischen Polyisocyanatisomerengemisches mit einem Gehalt von ca. 65% Zweikerndiisocyanaten (Desmodur 44 V 40 der Bayer AG) intensiv eingerührt.

Nach 10 Sekunden Rührzeit wird in die oben verwendete Profilform eingegossen. Bei Raumtemperatur kann nach ca. 10 Minuten aus der mit Trennmittel vorbehandelten Form ein Intumeszenzprofil entformt werden. Das Raumgewicht beträgt ca. 0,3 g /$cm^3$.

Im Intumeszenztest wird ein Aufschäumen auf über 200 Vol.-% beobachtet, desgleichen bei der Beflammungsprobe. Es findet kein Nachbrennen statt. Das Material hat eine Shore-A-Härte von 45.

Eine Materialprobe zeigt das gleiche gute Intumeszenzverhalten auch nach einer 30-tägigen Lagerung unter Wasser und anschliessendem Rücktrocknen.

Im Beflammungstest wurde ebenso wie beim Test zum Nachbrennen keine Bildung von abfliessender Schmelze beobachtet, wie es der Fall wäre, wenn man an Stelle von Melaminphosphat Melamin benutzen würde, oder Ammoniumpolyphosphat.

Beispiel 15

100 Teile Polyol 2a werden mit 35 Teilen Melamin verrührt, dann setzt man 17 Teile 85%ige $H_3PO_4$ hinzu und rührt 5 Minuten, dann werden zugemischt 60 Teile des P-Esters aus Beispiel 14, 2 Teile Titandioxid-Weisspigment und 15 Teile Al-Oxydhydrat. Man erhält eine gut rührbare homogene fliessfähige Mischung, die in einem offenen Rührgefäss mit einem Laborrührgerät mit 100 Teilen des in Beispiel 14 auch verwendeten Polyisocyanates verrührt wird.

Es wird dann wie in Beispiel 14 weiterverarbeitet und geprüft. Das erhaltene Intumeszenzprofil hat ein Raumgewicht von ca. 0,14 g/cm$^3$ und ist zähplastisch mit geringer Rückstellgeschwindigkeit bei Verformung der Schaumstoffstruktur bei 20 °C. Im Beflammungstest wird ein Aufschäumen auf über 500 Vol-% beobachtet, es tritt keine abtropfende Schmelze auf. Das Material ist hervorragend geeignet, um in Fugen eingedrückt zu werden und dort für vorbeugenden Brandschutz zu sorgen.

## Patentansprüche

1. Gegebenenfalls geschäumte Intumeszenzmassen erhalten aus Polyurethanen, Melaminphosphaten und gegebenenfalls weitere Zusatzmitteln, dadurch gekennzeichnet, dass als Polyurethane Umsetzungsprodukte von

1. Polyisocyanaten mit

2. Polyethern einer durchschnittlichen OH-Zahl von 150 bis 500, die durch Anlagerung von Alkylenoxiden, die zu 50–100 Gew.-%, vorzugsweise zu 100 Gew.-%, aus Ethylenoxid bestehen, an niedermolekulare Starter erhalten worden sind, gegebenenfalls in Gegenwart von

3. Hydroxylgruppen aufweisenden Polyestern der OH-Zahl 100 bis 300, erhalten durch Umsetzung von zwei bis 10 C-Atome aufweisenden aliphatischen, cycloaliphatischen araliphatischen und aromatischen Polycarbonsäuren mit mindestens zwei Polyolen aus zwei verschiedenen der drei folgenden Gruppen

a) mehr als drei OH-Gruppen aufweisende Hydroxylverbindungen vom Molekulargewicht bis 200,

b) drei OH-Gruppen aufweisende Hydroxylverbindungen vom Molekulargewicht bis 150,

c) zwei OH-Gruppen aufweisende Hydroxylverbindungen vom Molekulargewicht bis 80,

wobei ein Polyol der Gruppe a) angehören soll, und als Zusatzmittel

4. Wasser und/oder

5. weitere Verbindungen mit gegenüber Isocyanaten reaktionsfähigen Wasserstoffatomen verwendet werden.

2. Intumeszenzmassen nach Anspruch 1, dadurch gekennzeichnet, dass als Polyisocyanate aromatische Mehrkern-Polyisocyanate vom MDI-Typ und als Phosphate Melaminphosphate mit 0,2 bis 1 Mol Ortho-Phosphorsäure pro Mol Melamin verwendet werden.

3. Intumeszenzmassen nach Anspruch 1 und 2, dadurch gekennzeichnet, dass als gegebenenfalls mit zuverwendende weitere Verbindungen (5) eingesetzt werden: mindestens zwei Hydroxylgruppen aufweisende phosphorhaltige Kondensationsprodukte, erhältlich durch Kondensation von gegebenenfalls OH-Gruppen enthaltenden primären oder sekundären Mono- und/oder Polyaminen, Carbonylverbindungen und Dialkylphosphiten, gegebenenfalls unter anschliessendem Oxalkylieren.

4. Formteile und Vorrichtungen für den vorbeugenden Brandschutz, hergestellt aus Intumeszenzmassen nach Anspruch 1 bis 3.

## Revendications

1. Mélanges intumescents éventuellement transformés en mousse, obtenus à partir de polyuréthannes, de phosphates de mélamine et, le cas échéant, d'autre additifs, caractérisés en ce qu'on utilise comme polyuréthannes des produits de réaction

1. de polyisocyanates avec

2. des polyéthers ayant un indice d'hydroxyle moyen de 150 à 500, qui ont été obtenus par addition d'oxydes d'alkylène, qui sont formés à 50–100% en poids et de préférence à 100% en poids d'oxyde d'éthylène, sur des composés amorceurs de bas poids moléculaire, éventuellement en présence

3. de polyesters porteurs de groupes hydroxyle ayant un incide d'hydroxyle de 100 à 300, obtenus par réaction d'acides polycarboxyliques aliphatiques, cycloaliphatiques, araliphatiques et aromatiques présentant 2 à 10 atomes de carbone, avec au moins deux polyols choisis dans deux différents des trois groupes suivants

a) composés hydroxyliques portant plus de trois groupes OH, de poids moléculaire allant jusquà 200,

b) composés hydroxyliques portant trois groupes OH, de poids moléculaire allant jusqu'à 150,

c) composés hydroxyliques portant deux groupes OH, de poids moléculaire allant jusqu'à 80, un polyol devant appartenir au groupe a), et comme additifs

4. de l'eau et/ou

5. d'autres composés présentant des atomes d'hydrogène réactifs vis-à-vis d'isocyanates.

2. Mélanges intumescents suivant la revendication 1, caractérisés en ce qu'on utilise comme polyisocyanates des polyisocyanates à plusieurs noyaux aromatiques du type MDI et comme phosphates, des phosphates de mélamine avec 0,2 à 1 mole d'acide ortho-phosphorique par mole de mélamine.

3. Mélanges intumescents suivant les revendications 1 à 2, caractérisés en ce qu'on utilise comme autres composés (5) devant éventuellement être ajoutés: des produits de condensationn phosphorés présentant au moins deux groupes hydroxyle, pouvant être obtenus par condensation de mono-amines et/ou de polyamines primaires ou secondaires contenant éventuellement des groupes OH, de composés carbonyliques et de phosphites de dialkyle, éventuellement suivie d'une oxalkylation.

4. Pièces moulées et dispositifs destinés à la protection contre l'incendie, obtenus à partir de mélanges intumescents suivant les revendications 1 à 3.

**Claims**

1. Optionally foamed intumescent composition obtained from polyurethanes, melamine phosphates and optionally other additives, characterised in that the polyurethanes used are reaction products of

1. polyisocyanates with

2. polyethers which have an average OH number of 150 to 500 and have been obtained by the addition of alkylene oxides consisting of 50–100% by weight, preferably 100% by weight, of ethylene oxide, on to low molecular weight starters, optionally in the presence of

3. hydroxyl-group-containing polyesters with an OH number of 100 to 300, obtained by reacting aliphatic, cycloaliphatic, araliphatic and aromatic polycarboxylic acids containing two to 10 C-atoms with at least two polyols from two different groups of the three following groups

a) hydroxyl compounds containing more than three OH groups and having a molecular weight of up to 200,

b) hydroxyl compounds containing three OH groups and having a molecular weight of up to 150 and

c) hydroxyl compounds containing two OH groups and having a molecular weight of up to 80, wherein one polyol should belong to grup a), and as additives,

4. water and/or

5. other compounds containing isocyanate-reactive hydrogen atoms.

2. Intumescent compositions according to Claim 1, characterised in that the polyisocyanates used are aromatic multi-nuclear polyisocyanates of the MDI type and the phosphates used are melamine phosphates with 0.2 to 1 mol of orthophosphoric acid per mol of melamine.

3. Intumescent compositions according to Claim 1 and 2, characterised in that the following are used as the other compounds (5) which are optionally also to be used: phsophorus-containing condensation products containing at least two hydroxyl groups, obtainable by the condensation of primary or secondary mono- and/or polyamines optionally containing OH groups, carbonyl compounds and dialkyl phosphites, optionally followed by alkoxylation.

4. Mouldings and devices for preventive fire protection, produced from intumescent compositions according to Claim 1 to 3.